# EUROPÄISCHE PATENTSCHRIFT

(11) **EP 1 705 398 B1**
(45) Veröffentlichungstag und Bekanntmachung des Hinweises auf die Patenterteilung: **18.04.2012**
(21) Anmeldenummer: 06005372.5
(22) Anmeldetag: 16.03.2006
(51) Int. Cl.: F16F 9/512

(54) **Stossdämpfer**
Shock absorber
Amortisseur de chocs

(30) Priorität: 22.03.2005 DE 102005013734
(43) Veröffentlichungstag der Anmeldung: 27.09.2006
(73) Patentinhaber: Weforma Dämpfungstechnik GmbH, 52224 Stolberg (DE)
(72) Erfinder: Heger, Axel, 52224 Stolberg (DE); Schmidt, Armin, 52224 Stolberg (DE)
(74) Vertreter: Bauer, Dirk

(56) Entgegenhaltungen:
- WO-A-00/52354
- DE-A1- 10 213 726
- DE-B1- 1 580 775
- DE-C2- 4 294 772

## Beschreibung

Die Erfindung betrifft einen Stoßdämpfer zum Dämpfen der Bewegung einer Masse mit den Merkmalen gemäß dem Oberbegriff des Anspruchs 1. Derartige gattungsgemäße Stoßdämpfer werden in großen Stückzahlen hergestellt und finden vielfältige Verwendung in nahezu allen Bereichen des Maschinen- und Anlagenbaus. Sie werden zum Beispiel eingesetzt in Verbindung mit Rollenbahnen, über welche Massen, insbesondere in Form von Paletten mit darauf befindlichen Werkstücken transportiert werden. Die Stoßdämpfer sind in diesem Fall zum Beispiel in einen Anschlag der Rollenbahn integriert und dienen dort zum kontrollierten Verzögern der bewegten Massen. Ein Anhalten z.B. der Palette ist erforderlich, wenn das darauf befindliche Werkstück an einer Bearbeitungsstation bearbeitet werden soll.

Um ein und denselben Stoßdämpfer auch zum Verzögern von stark unterschiedlich großen bzw. sich unterschiedlich schnell bewegenden Massen einsetzen zu können, ist es im Stand der Technik bekannt, derartige Stoßdämpfer mit veränderbarer Dämpfungskonstante auszubilden. Dabei wird unterschieden zwischen Stoßdämpfern, bei denen die Dämpfungskonstante in Abhängigkeit von der Größe eines Druckes in einem Druckraum des Stoßdämpfers veränderbar ist und solchen, bei denen die Dämpfungskonstante nach Maßgabe der Länge eines jeweils von der zu verzögernden Masse bereits zurückgelegten Dämpfungsweges veränderbar ist. Erstgenannte Stoßdämpfer finden zum Beispiel als Automobil-Stoßdämpfer Verwendung und sind typischerweise so konstruiert, dass sich die Größe ihrer Dämpfungskonstante im Wesentlichen umgekehrt proportional zur Größe des Druckes in dem Druckraum des Stoßdämpfers verändert.

Ein Beispiel für einen gattungsgemäßen Stoßdämpfer mit vom Dämpfungsweg abhängig veränderbarer Dämpfungskonstante ist in der deutschen Offenlegungsschrift DE 102 13 726 A1 offenbart. Konkret ist dort ein Stoßdämpfer zum Verzögern einer bewegten Masse offenbart, wobei der Stoßdämpfer ein rohrförmiges Gehäuse, ein koaxial in dem Gehäuse gelagertes Druckrohr und einen in dem Druckrohr axial verschiebbar gelagerten Kolben aufweist. Weiterhin umfasst der Stoßdämpfer eine Kolbenstange zum Übertragen der Bewegung einer zu verzögernden Masse auf den Kolben und einen Druckraum, welcher zumindest durch die Innenseite des Druckrohres und den Kolben begrenzt und mit einer Hydraulikflüssigkeit gefüllt ist. Darüber hinaus umfasst der Stoßdämpfer einen Speicherraum zum Speichern der Hydraulikflüssigkeit auch außerhalb des Druckraumes und eine Mehrzahl von Kanälen zum Austauschen der Hydraulikflüssigkeit zwischen dem Druckraum und dem Speicherraum nach Maßgabe der Bewegung des Kolbens, das heißt insbesondere nach Maßgabe der durch die aktuelle Stellung des Kolbens repräsentierten Größe des aktuell bereits zurückgelegten Dämpfungsweges der Masse.

Bei dem in der besagten Offenlegungsschrift offenbarten Stoßdämpfer wird dessen Dämpfungskonstante dadurch verändert, dass in Abhängigkeit des jeweils zurückgelegten Dämpfungsweges Drosselöffnungen, welche jeweils das dem Druckraum zugewandte Ende der oben erwähnten Kanäle repräsentieren, sukzessive durch den Kolben verschlossen werden. Die Möglichkeiten zum Entweichen der Hydraulikflüssigkeit aus dem mit Druck beaufschlagten Druckraum werden dadurch sukzessive reduziert, was auf Grund der Inkompressibilität der Hydraulikflüssigkeit mit einer Erhöhung der Dämpfungskonstanten des Stoß- , dämpfers einhergeht. Mit zunehmender Länge des Dämpfungsweges erhöht sich also die Dämpfungskonstante, wodurch die Masse zunehmend stärker abgebremst wird.

Solange die Masse in einem begrenzten Gewichtsbereich bleibt, ist das in der besagten Offenlegungsschrift beschriebene Prinzip zur Realisierung eines kontrollierten Dämpfungsweges praktikabel. Zur kontrollierten Dämpfung einer größeren oder schnelleren Masse außerhalb des Gewichts- oder Geschwindigkeitsbereiches wäre ein baugleicher Stoßdämpfer jedoch ungeeignet, weil die größere Masse bzw. Geschwindigkeit den von dem Stoßdämpfer zugelassenen Dämpfungsweg insgesamt zu schnell durchlaufen und am Ende dann schlagartig abgebremst werden würde. Durch diese starke Verzögerung könnte die Masse zu stark belastet, das heißt beschädigt oder gar zerstört werden. Andersherum würde eine zu kleine Masse wegen der kleinen ihr innewohnenden Bewegungsenergie zu frühzeitig abgebremst, so dass sie eine definierte Endposition nicht erreicht, was wiederum zu Störungen in der Steuerung derartiger Rollenbahnanlagen führen kann.

Aus der DE 42 94 772 A1 ist ein Kraftfahrzeug-Schwingungsdämpfer bekannt, der im Boden des Druckrohrs eine Ventileinrichtung besitzt. Je nach Bewegungsrichtung des Kolbens, bens, d.h. in Abhängigkeit davon, ob das Fahrzeugrad ein- oder ausfedert, wird eine unterschiedliche Dämpfungskonstante realisiert. Bei einer "Druckstufe" wird ein Ventilkolben, der auf den gegenüberliegenden Seiten mit den Drücken aus den beiden Arbeitsräumen in dem Druckrohr beaufschlagt wird, in eine Stellung gebracht, in der der Drosselquerschnitt sehr klein ist, so dass die Dämpfungskonstante hoch ist. Hingegen wird bei umgekehrter Bewegungsrichtung des Dämpferkolbens, d.h. bei der "Zugstufe", der Ventilkolben in eine Stellung gebracht, in der er den gegebenen Drosselquerschnitt vollständig frei gibt, so dass die Dämpfungskonstante entsprechend reduziert ist. Die Umschaltung zwischen den beiden vorgenannten Dämpfungscharakteristiken erfolgt mehr oder weniger schlagartig.

Aus der DE 100 47 433 C1 ist ein Kolben-Zylinder-Aggregat mit einer Bremseinrichtung bekannt. Das Druckrohr bei dieser Vorrichtung bildet zugleich auch das Gehäuse, da sich der Speicherraum stirnseitig in Verlängerung des Arbeitsraums befindet. Der Kolben ist mit einer Ventileinrichtung versehen, bei der Durchströmöffnungen aufgrund des Staudrucks im Arbeitsraum von einer elastisch verformbaren Scheibe ab einer definierten Verstellgeschwindigkeit gegen eine Offenhaltekraft zumindest teilweise verschlossen werden.

Ferner offenbart die DE 42 94 772 C2 ein Bodenventil für einen Kraftfahrzeug-Schwingungsdämpfer, bei dem ein Ventilkörper in Abhängigkeit von einem Verhältnis der Drücke in einem Arbeitsraum und in einem Speicherraum eine unterschiedliche Position einnimmt und damit eine Durchtrittsbohrung zwischen dem Arbeitsraum und dem Speicherraum freigibt. Dabei ist sowohl ein vollständiger Verschluss besagter Durchtrittsbohrung als auch eine vollständige Freigabe derselben möglich. Mit dem aus der genannten Schrift bekannten Schwingungsdämpfer sollen beim Ein- und Ausfedern eines KFZ-Rades unterschiedliche Dämpfungscharakteristiken realisiert werden.

In der deutschen Auslegeschrift DE 1 580 775 B wird eine so genannte Dämpfungszwischenwand für hydraulische Stoßdämpfer oder hydropneumatische Federn für Kraftfahrzeuge offenbart. Die gezeigte Einrichtung dient einer Steuerung einer Überströmung zwischen zwei Arbeitsräumen, wobei ein axial verschiebbar gelagerter Ventilkörper in Abhängigkeit von einer Druckdifferenz zwischen den beiden Arbeitsräumen geöffnet oder geschlossen werden kann oder einen Zwischenstellung einnehmen kann.

Abschließend offenbart die WO 00/52354 eine Kolben-Zylinder-Anordnung, die dem Zweck dient, ein "Einknicken" zwischen einem Zugfahrzeug und einem an dieses Fahrzeug angehängten Anhänger zu verhindern. Der Kolben dieser Kolben-Zylinder-Anordnung weist eine Drosselbohrung auf, die stets geöffnet ist, sowie weitere Drosselbohrungen, die in Abhängigkeit von einem Kolben eines Ventilkörpers mehr oder weniger stark verschlossen werden können. Mit ansteigendem Druck eines überströmenden Mediums, das heißt, mit einem ansteigenden Druckgefälle zwischen zwei mittels der Drosselbohrungen verbundenen Arbeitsräumen tendiert der Ventilkörper dazu, die Drosselbohrung zu reduzieren, wobei er gegen die Kraft einer Blattfeder bewegt wird. Auf diese Weise kann eine lastabhängig ansteigende Drosselwirkung erreicht werden.

### Aufgabe

Ausgehend von diesem Stand der Technik liegt der Erfindung deshalb die Aufgabe zugrunde, einen bekannten Stoßdämpfer zum Dämpfen der Bewegung einer Masse dahingehend weiterzubilden, dass er das Vorhandensein einer zu verzögernden Masse oberhalb eines vorgegebenen Impulsschwellenwertes erkennt und in diesem Fall automatisch eine (wesentliche) Vergrößerung seiner eigenen Dämpfungskonstante bereits zu Beginn des Dämpfungsweges der Masse veranlasst. Insbesondere soll es möglich sein, auch unterschiedlich große bewegte Massen mittels des Stoßdämpfers so abzubremsen, dass der bis zum Stillstand zurückgelegte Dämpfungshub im wesentlichen konstant ist, so dass massen- und geschwindigkeitsunabhängig stets der Endanschlag des Kolbens erreicht wird, so dass sie die abzubremsende Masse immer in derselben, definierten Endstellung befindet.

### Lösung

Diese Aufgabe wird durch den Gegenstand des Patentanspruchs 1 gelöst. Ausgehend von dem gattungsgemäßen Stoßdämpfer wird die Aufgabe nach der Erfindung dahingehend gelöst, dass mindestens ein zweiter Kanal den Druckraum und den Speicherraum verbindet, wobei in dem Stoßdämpfer eine Ventileinrichtung mit einem Ventilgehäuse und einem Ventilkolben in dem mindestens einen zweiten Kanal eingebaut ist, wodurch dieser als Ventilkanal ausgebildet ist; und dass der Ventilkolben nach Maßgabe des jeweils aktuellen Druckes in dem Druckraum in dem Ventilgehäuse verschiebbar gelagert ist; und der Ventilkanal so durch die Ventileinrichtung geführt ist, dass der wirksame Drosselquerschnitt des Ventilkanals zunehmend verringert wird, wenn sich der Ventilkolben auf Grund von steigendem Druck in dem Druckraum verschiebt.

Eine große in ihrer Bewegung zu dämpfende Masse überträgt bei ihrer Verzögerung eine große Kraft auf die Kolbenstange und damit auf den Kolben des Stoßdämpfers und führt durch eine daraus resultierende Bewegung des Kolbens zu einem entsprechend starken Druckanstieg in einem Druckraum des Stoßdämpfers. Die Größe des Druckes in dem Druckraum repräsentiert demnach ein Maß für die Größe der zu verzögernden Masse, insbesondere bei einer als konstant angenommenen Auftreffgeschwindigkeit der Masse auf die Kolbenstange. Bei konstanter Masse steigt mit zunehmender Auftreffsgeschwindigkeit der Druck in dem Druckraum gleichfalls an. Die beanspruchte Übertragung des Druckes in dem Druckraum auf einen Ventilkolben und die dadurch veranlasste Verringerung beziehungsweise Schließung des Querschnittes eines Ventilkanals bewirkt vorteilhafterweise eine gewünschte Vergrößerung der Dämpfungskonstanten des Stoßdämpfers. Dies ist damit zu erklären, dass der insgesamt während der Dämpfung für eine Verdrängung der Hydraulikflüssigkeit aus dem Druckraum in einen Speicherraum zur Verfügung stehende Querschnitt durch die beanspruchte Ventileinrichtung bei besonders hohem Druck in dem Druckraum verringert wird. Durch den mindestens einen ersten Kanal besteht aber ein vom Druck unabhängiger Drosselquerschnitt, so dass auch bei einem vollständigen Verschluss des zweiten Kanals keine Blockierung des Kolbens und schlagartige Abbremsung der Masse eintritt. Auf Grund der Inkompressibilität der Kolbenstange und der Hydraulikflüssigkeit überträgt sich ein durch eine große Masse bedingter Druckanstieg in dem Druckraum quasi innerhalb einer infinitesimal kurzen Zeit auf den Ventilkolben, wodurch die Ventileinrichtung bei geeigneter Ausbildung sofort in die Lage versetzt wird, eine vorbestimmte Vergrößerung der Dämpfungskonstanten in der beanspruchten und beschriebenen Weise zu bewirken. Die beanspruchte Ventileinrichtung ermöglicht damit quasi ein Umschalten der Dämpfungskonstanten bereits zu Beginn eines Dämpfungsweges bei großen Massen. Die Ventileinrichtung ermöglicht durch das Umschalten der Dämpfungskonstanten nachfolgend eine kontrollierte Verzögerung auch von unterschiedlich großen Massen über einen begrenzten Dämpfungsweg mit ein und demselben Stoßdämpfer.

Grundsätzlich schließt das beanspruchte Verringern des Drosselquerschnittes des Ventilkanals ein vollständiges Schließen des Drosselquerschnittes mit ein. Ein vollständiges Schließen des Drosselquerschnitts ist deshalb grundsätzlich möglich, weil neben dem Ventilkanal noch mindestens ein weiterer Kanal vorhanden ist dieser zumindest teilweise geöffnet bleiben, um die Verzögerung der Masse durch Verdrängen von Hydraulikflüssigkeit aus dem Druckraum während einer gewünschten Verzögerungszeitdauer zu realisieren. Nach Ablauf der gewünschten Verzögerungszeitdauer wäre ein Schließen der weiteren Kanäle unschädlich, weil die Masse dann zur Ruhe gekommen ist.

Gemäß einer bevorzugten Ausführungsform der Ventileinrichtung ist es vorteilhaft, wenn der Ventilkolben mit einem ersten Teil seiner Oberfläche dem jeweils aktuellen Druck in dem Druckraum ausgesetzt ist und mit einem zweiten, dem ersten Teil gegenüberliegenden Teil seiner Oberfläche an einer Gegendruckfedereinrichtung anliegt. Die Gegendruckfedereinrichtung bestimmt das Umschaltverhalten der Ventileinrichtung. Insbesondere durch geeignetes Ausbilden der Federcharakteristik einer Druckfedereinrichtung innerhalb der Gegendruckfedereinrichtung kann das Umschaltverhalten der Ventileinrichtung individuell definiert werden. So ist es durch geeignete Auslegung der Federcharakteristik beispielsweise möglich, die Übergangszeitdauer festzulegen, die die Ventileinrichtung zum Schlie-βen beziehungsweise Öffnen des Drosselquerschnittes des Ventilkanals und damit zur Einstellung eines neuen Wertes der Dämpfungskonstanten benötigt. Neben der Übergangszeitdauer kann mithilfe der Federcharakteristik auch ein Druckschwellenwert vorgegeben werden, der von einem Druck in dem Druckraum erst überschritten werden muss, bevor die Umschaltung der Dämpfungskonstanten durch die Ventileinrichtung einsetzt. Dabei repräsentiert der Druckschwellenwert, wie oben erläutert, einen Impulsschwellenwert; das heißt er definiert ein Mindestgewicht bzw. eine Mindestgeschwindigkeit einer Masse, damit die Umschaltung einsetzt. Schließlich bestimmt die Federcharakteristik auch das transiente Verhalten der Ventileinrichtung, das heißt ob der neue Endwert der Dämpfungskonstanten in Form eines progressiven, linearen, degressiven oder sprungartigen Verlaufs aus deren aktuellem Wert hervorgeht.

Vorteilhafterweise ist die Druckfedereinrichtung in Form eines Paketes von Tellerfedern ausgebildet, weil Tellerfedern typischerweise eine gewünscht hohe Federkonstante aufweisen und sich mit diesem ein stetiges Übergangsverhalten, das heißt ein langsames Verändern der Dämpfungskonstante realisieren lässt.

Die Gegendruckfedereinrichtung weist vorteilhafterweise einen Verschlussstopfen auf, welcher vorzugsweise in ein Gewinde einer Öffnung des Ventilgehäuses einschraubbar ist, wobei die Druckstückführung mit dem Verschlussstopfen verbunden ist, sodass die Position der Druckstückführung relativ zu dem ortsfesten Druckanschlagkörper und damit vorteilhafterweise auch der Druckschwellenwert durch Drehen des Verschlussstopfens in dem Gewinde variabel einstellbar ist.

Die Ausbildung eines Abschnittes des Ventilkanals in dem Ventilkolben bietet den Vorteil, dass sie im Unterschied zu zum Beispiel einer Bypasslösung, bei welcher zumindest ein Teil des Ventilkanals in Umgehung des Ventilkolbens durch das Ventilgehäuse in den Hubraum gelegt werden müsste, sehr einfach realisierbar ist.

Vorteilhafterweise ist zumindest ein Abschnitt des Ventilkanals so durch den Hubbereich des Ventilkolbens geführt, dass der Drosselquerschnitt des Ventilkanals einfach durch unmittelbarere Einwirkung des Ventilkolbens je nach dessen Position im Hubbereich abdeckbar beziehungsweise veränderbar ist.

Vorteilhafterweise ist die Bewegung des Ventilkolbens bei steigendem Druck in dem Druckraum durch einen fest mit dem Ventilgehäuse verbundenen Ventilkolbenanschlagskörper begrenzt; dieser Ventilkolbenanschlagskörper ist vorzugsweise so positioniert, dass er eine vollständige Schließung des Drosselquerschnittes des Ventilkanals durch den Ventilkolben bei ausreichend hohem Druck gestattet.

Eine einstückige Ausbildung des Ventilgehäuses mit dem Gehäuse des Stoßdämpfers bietet eine einfache Möglichkeit zur Fertigung sowie Kostenvorteile.

Vorteilhafterweise ist die Ventileinrichtung an einer dem Kolben des Stoßdämpfers gegenüberliegenden Seite des Gehäuses des Stoßdämpfers angeordnet. Dies hat wiederum fertigungstechnische Vorteile sowie Kostenvorteile. Außerdem ist der Raumbedarf bei einer derartigen Ventileinrichtung minimal; insbesondere stehen bei dieser Konstruktion keine Teile seitlich von dem grundsätzlich rohrförmigen Gehäuse des Stoßdämpfers ab.

Bei einer derartigen Ausbildung der Ventileinrichtung ist der Ventilkolben vorzugsweise koaxial zu dem Kolben des Stoßdämpfers und insbesondere ebenfalls in dem Druckrohr des Stoßdämpfers gelagert. Weiterhin ist bei dieser Ausführungsform zwischen dem Kolben des Stoßdämpfers und dem Ventilkolben vorzugsweise eine weitere Druckfedereinrichtung vorgesehen, deren Federkonstante jedoch wesentlich kleiner ist als die Federkonstante der Druckfedereinrichtung der Gegendruckfedereinrichtung. Die weitere Druckfedereinrichtung dient neben der sie umgebenden inkompressiblen Hydraulikflüssigkeit auch zum Übertragen von Kräften zwischen dem Kolben des Stoßdämpfers und dem Ventilkolben. Insbesondere dient sie dazu, in einem drucklosen Zustand in dem Druckraum den Kolben des Stoßdämpfers in die Nullstellung zurückzuverlagern sowie gleichzeitig ein Austreten des Ventilkolbens aus dem Ventilgehäuse zu verhindern.

Alternativ zu einer Anbringung der Ventileinrichtung an einer Stirnseite des Gehäuses des Stoßdämpfers gegenüberliegend zu dessen Kolben kann die Ventileinrichtung mit dem Ventilgehäuse auch als Stutzen in einem beliebigen Winkel α seitlich an dem Gehäuse des Stoßdämpfers angebracht sein, wobei dann der Ventilkolben entsprechend dem beliebigen Winkel relativ zu der axialen Richtung des Stoßdämpfers verschiebbar in dem Ventilgehäuse gelagert ist. Eine derartige Anformung der Ventileinrichtung kann insbesondere bei einer einbau-bedingt reduzierten Gesamtlänge des Stoßdämpfers sinnvoll sein. Auch eine Anordnung der Ventilanordnung in dem Kolben kommt in Frage, insbesondere wenn eine Verstellung der Charakteristik der Ventileinrichtung nicht erforderlich ist.

Schließlich ist es für eine Kontrolle der Verzögerung der Masse auf ihrem Dämpfungsweg vorteilhaft, wenn der mindestens eine erste Kanal zum Austauschen von Hydraulikflüssigkeit zwischen dem Druckraum und dem Speicherraum im Übergang zu dem Druckraum eine Drosselöffnung ausbildet, welche - je nach Position des Kolbens des Stoßdämpfers in dem Druckraum - von dem Kolben zumindest teilweise verschlossen wird. Im Unterschied zu der Ventileinrichtung, welche einen Verschluss einzelner Ventilkanäle und damit eine Vergrößerung der Dämpfungskonstanten in Abhängigkeit des Druckes in dem Druckraum bewirkt, ermöglicht die beschriebene mindestens eine Drosselöffnung in dem Druckrohr vorteilhafterweise eine Vergrößerung der Dämpfungskonstanten in Abhängigkeit eines jeweils bereits von der Masse zurückgelegten Dämpfungsweges. Es liegt somit erfindungsgemäß eine Kombination aus einer geschwindigkeits- und massenabhängigen Dämpfungskonstante (druckgesteuert) mit einer wegabhängigen Dämpfungskonstante vor. Der erste Kanal soll nicht durch die Ventileinrichtung geführt sein.

### Ausführungsbeispiele

Die Erfindung wird nachfolgend anhand von Ausführungsbeispielen erläutert. Es zeigen
- Fig. 1: einen Stoßdämpfer mit einer erfindungsgemäßen Ventileinrichtung; und
- Fig. 2: eine Detailansicht der erfindungsgemäßen Ventileinrichtung.

Unter Bezugnahme auf die genannten Figuren erfolgt zunächst eine Beschreibung des konstruktiven Aufbaus des Stoßdämpfers 100 mit der erfindungsgemäßen Ventileinrichtung 170, um daran anschließend deren Funktionsweise zu erläutern.

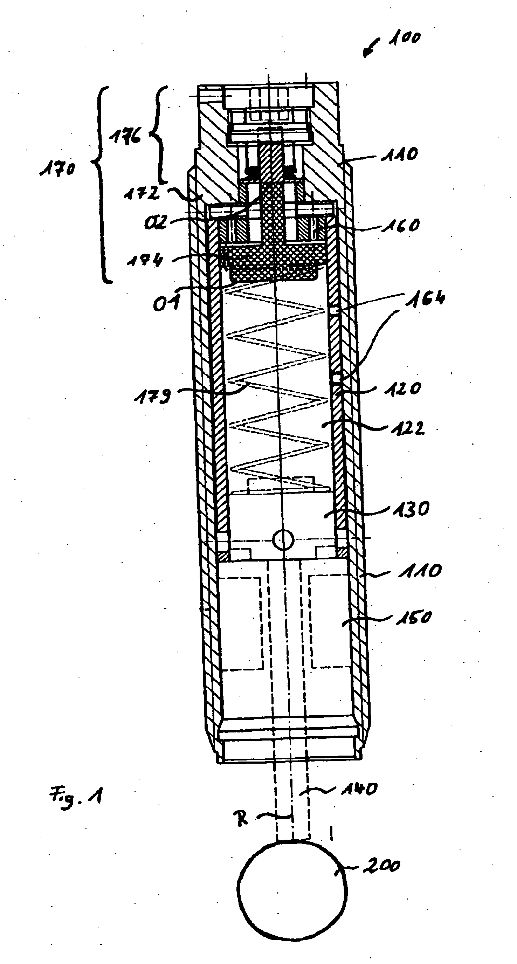

Figur 1 zeigt einen Stoßdämpfer 100 zum Dämpfen der Bewegung, das heißt der Geschwindigkeit, einer Masse 200. Zu diesem Zweck umfasst der Stoßdämpfer 100 ein Gehäuse 110 mit einem darin gelagerten Druckrohr 120, welches einen Druckraum 122 aus-, bildet und mit einer Hydraulikflüssigkeit gefüllt ist. In dem Druckrohr ist ein Kolben 130 des Stoßdämpfers 100 axial verschiebbar gelagert. Neben den Wänden des Druckrohres 120 bildet der Kolben 130 eine Begrenzung des Druckraumes 122. An der dem Kolben 130 gegenüberliegenden Seite wird der Druckraum 122 bei dem in Figur 1 gezeigten Ausführungsbeispiel durch die erfindungsgemäße Ventileinrichtung 170 und insbesondere durch deren Ventilkolben 174 abgeschlossen. Vorteilhafterweise ist der Ventilkolben 174 in demselben Druckrohr 120 wie der Kolben 130 geführt. Alternativ zu dem in Figur 1 gezeigten Ausführungsbeispiel des Stoßdämpfers könnte die Ventileinrichtung 170 auch zum Beispiel in Form eines Stutzens in einem beliebigen Winkel α>0 seitlich, vorzugsweise quer zur axialen Richtung R an dem Gehäuse 110 angebracht sein (in Figur 1 nicht gezeigt); in diesem Fall könnte der Druckraum 122 an der dem Kolben 130 gegenüberliegenden Seite durch eine einfache Stirnseite des Gehäuses 110 abgeschlossen sein.

In dem Stoßdämpfer 100 ist weiterhin eine Kolbenstange 140 vorgesehen zum Übertragen der Bewegung beziehungsweise Bremskraft der Masse 200 auf den Kolben 130. Schließlich umfasst der Stoßdämpfer 100 einen Speicherraum 150 zum Aufnehmen von Hydraulikflüssigkeit aus dem Druckraum 122 während eines Dämpfungsvorganges. Zu diesem Zweck steht der Speicherraum 150 über mindestens einen ersten Kanal 164 in dem Druckrohr 120 und über mindestens einen zweiten Kanal 160 in der Ventileinrichtung mit dem Druckraum 122 in Verbindung. Von dem Kanal 160 ist in Figur 1 lediglich ein durch die Ventileinrichtung 170 und insbesondere deren Kolben 174 geführter Abschnitt 160 gezeigt; andere Teile des Kanals 160, welche innerhalb des Gehäuses 110 geführt sind, sind, in Figur 1 nicht gezeigt.

Die Ventileinrichtung 170 repräsentiert den in Figur 1 gezeigten gesamten oberen Bereich des Stoßdämpfers 100. Ihr Gehäuse 172 kann, wie in Figur 1 gezeigt, einstückig mit dem Gehäuse 110 des Stoßdämpfers ausgebildet sein; alternativ dazu können die Gehäuse 110, 172 jedoch auch getrennt und voneinander lösbar ausgeführt sein. Unabhängig von der konkreten Ausgestaltung der Ventileinrichtung 170 ist es für deren weiter unten beschriebene Funktionsweise wesentlich, dass ihr Ventilkolben 174 mit einem ersten Teil seiner Oberfläche 01 dem jeweiligen Druck in dem Druckraum 122 unmittelbar ausgesetzt ist, wie in Figur 1 gezeigt. Wichtig ist es insbesondere, dass der Ventilkolben 174 auf große Drücke in dem Druckraum 122, wie sie durch große zu verzögernde Massen realisiert werden, seinerseits durch Verschiebung reagieren kann. Dem steht es nicht entgegen, dass bei dem in Figur 1 gezeigten Ausführungsbeispiel zwischen dem Ventilkolben 174 und dem Kolben 130 des Stoßdämpfers eine Druckfeder 179 zur Übertragung von Kräften zwischen diesen beiden Kolben, nämlich zu Rückstellung des Kolbens nach Beendigung des Dämpfungsvorgangs vorgesehen ist.

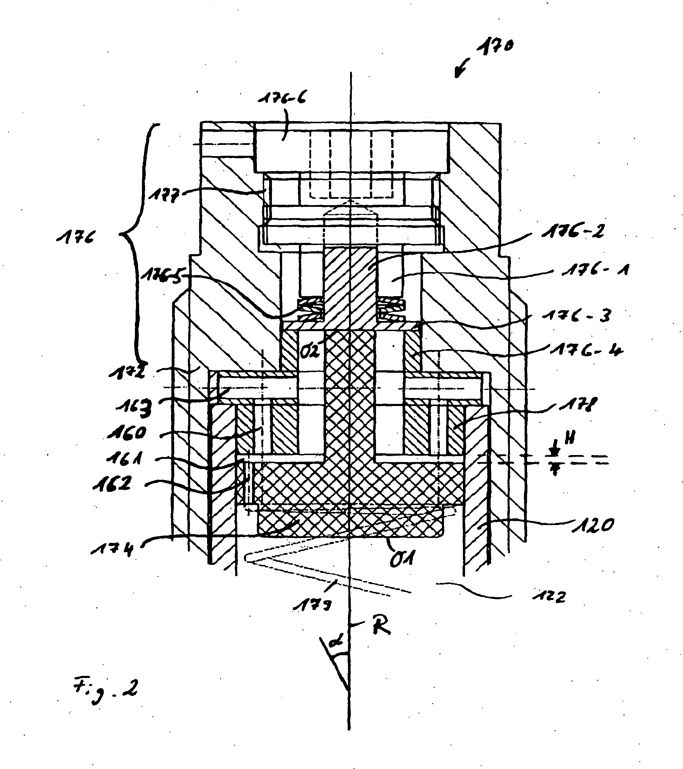

Figur 2 zeigt den detaillierten Aufbau der erfindungsgemäßen Ventileinrichtung 170. Bei dem hier gezeigten Ausführungsbeispiel ist der Ventilkolben 174 innerhalb des Ventilgehäuses 172 in dem Druckrohr 120 des Stoßdämpfers 100 in axialer Richtung R verschiebbar gelagert. Besonders deutlich ist der Abschnitt des Ventilkanals 160 zwischen dem Druckraum 122 und dem in Figur 1 gezeigten Speicherraum 150 zu erkennen. Dieser Abschnitt umfasst in Figur 2 mehrere Teilstücke 160, 161, 162 und 163, die grundsätzlich alle miteinander kommunizieren. Es ist zu erkennen, dass das Teilstück 162 durch den Ventilkolben 164 geführt ist und unmittelbar mit dem Druckraum 122 in Verbindung steht. Das Teilstück 161 ist in seiner Größe variabel, weil es den Hubraum H des Ventilkolbens 174 repräsentiert. Bei der in Figur 2 gezeigten Stellung des Kolbens 174 ist der Ventilkanal geöffnet, weil der Hubraum H hier nicht durch den Ventilkolben 174 verschlossen ist, sondern als Spalt geöffnet dargestellt ist.

Während der Ventilkolben mit dem ersten Teil Ol seiner Oberfläche, wie gesagt, dem Druckraum 122 zugewandt ist, liegt er mit einem zweiten, dem ersten Teil gegenüberliegenden Teil seiner Oberfläche 02 an eine Gegendruckfedereinrichtung 176 an. Genauer gesagt stößt er an ein Druckstück 176-2 in Form eines Anschlagkolbens an, welcher mit seinem einen Ende in einer Druckstückführung 176-1 geführt ist und welcher an seinem anderen Ende, an welches die zweite Oberfläche 02 des Ventilkolbens 174 anschlägt, einen radial auslagernden Flansch 176-3 aufweist. Zur Begrenzung der Bewegung des Druckstücks 176-2 in Richtung Druckraum 122 weist die Gegendruckfedereinrichtung 176 einen Druckstückanschlagskörper 176-4 auf; konkret dient dieser zur Begrenzung der Bewegung des Flansches des Druckstücks 176-2. Um das Druckstück 176-2 an den Druckanschlagskörper 176-4 anzudrücken, ist zwischen dem Flansch und der Druckstückführung eine Druckfedereinrichtung 176-5 vorgesehen. Diese weist eine gewünschte Federcharakteristik auf und drückt das Druckstück beziehungsweise insbesondere dessen Flansch mit einem vorbestimmten Druckschwellenwert gegen den Druckstückanschlagskörper 176-4. Die Druckfedereinrichtung 176-5 ist vorzugsweise in Form eines Paketes von Tellerfedern ausgebildet, weil diese mit einer für bestimmte vorgesehene Anwendungsfälle ausreichend großen Federkonstanten verfügbar sind.

Wie in Figur 2 zu erkennen ist, ist der Druckstückanschlagskörper 176-4 fest mit dem Ventilgehäuse 172 verbunden. Grundsätzlich kann auch die Druckstückführung 176-1, die gleichzeitig als Gegenanschlag für die Druckfedereinrichtung 176-5 dient, mit dem Ventilgehäuse 172 fest verbunden sein (in Figur 2 nicht gezeigt). Alternativ dazu ist es jedoch, wie in Figur 2 gezeigt, empfehlenswert, die Druckstückführung 176-1 statt dessen mit einem in eine Öffnung des Ventilgehäuses 172 einschraubbaren Verschlussstopfen 176-6 zu verbinden. Dies hat den Vorteil, dass dann durch ein Verdrehen des Verschlussstopfens in einem Gewinde 177 der Öffnung die Position der Druckstückführung 176-1 relativ zu dem ortsfesten Druckstückanschlagskörper 176-4 und damit gleichzeitig auch der Druckschwellenwert durch Drehen des Verschlussstopfens 176-6 variabel einstellbar ist.

Nach Darstellung des konstruktiven Aufbaus des Stoßdämpfers 100 und seiner Ventileinrichtung 170 wird nun dessen Funktionsweise wiederum unter Zuhilfenahme der Figuren 1 und 2 detailliert beschrieben.

Der Stoßdämpfer 100 hat die Aufgabe, eine sich auf ihn zu bewegende Masse 200 in ihrer Bewegung zu dämpfen, das heißt diese bis zum Stillstand abzubremsen. Dies geschieht in, der Weise, dass die Masse 200 zunächst an die Kolbenstange 140 anschlägt und auf diese Weise einen zeitlich veränderlichen Impuls, das heißt eine Kraft auf den Kolben 130 des Stoßdämpfers überträgt. Diese Kraftübertragung auf den Kolben 130 bewirkt einen Druckanstieg in dem Druckraum 122. Dieser Druckanstieg überträgt sich durch die in dem Druckraum befindliche inkompressible Hydraulikflüssigkeit, aber auch durch die Feder 179 unmittelbar auf den ersten Teil der Oberfläche Ol des Ventilkolbens 174. Wie bereits erwähnt, ist die Ventileinrichtung 170 jedoch so konstruiert, dass der Ventilkolben 174 mit seiner Oberfläche 02 an das Druckstück 176-2 anschlägt. Das Druckstück 176-2 wird durch die Tellerfedern 176-5 in Richtung Druckraum 122 gedrückt und stellt insofern einem von dem Ventilkolben 174 einwirkenden Druck einen Gegendruck in Höhe des besagten Druckschwellenwertes entgegen. Solange der Druck in dem Druckraum 122, verursacht durch die auf den Stoßdämpfer 100 einwirkende Masse 200, nicht über diesen Schwellenwert ansteigt, gibt das Druckstück 176-2 konstruktionsbedingt der Druckeinwirkung des Ventilkolbens 174 nicht nach, so dass dieser in seiner in Figur 2 gezeigten Position verbleibt. In dieser Position ist der Ventilkanal 160-163, der in Figur 2 durch den Ventilkolben 174 und dessen Hubraum H geführt ist, geöffnet, so dass auf Grund des Druckanstiegs in dem Druckraum 122 Hydraulikflüssigkeit aus dem Druckraum 122 über den Ventilkanal 160-163 in den Speicherraum 150 verdrängt werden kann. In dem Maße, wie Hydraulikflüssigkeit zumindest über den Ventilkanal 160-163 aus dem Druckraum 122 entweichen kann, kann der Kolben 130 des Stoßdämpfers einem Einwirken der Masse 200 nachgeben und auf diese Weise die Masse über einen Dämpfungsweg auf Null abbremsen.

Sobald der in dem Druckraum 122 entstehende Druck jedoch den durch die Gegendruckfedereinrichtung 176 voreingestellten Druckschwellenwert überschreitet, weil zum Beispiel die durch die Masse 200 bedingte Impulsänderung auf die Kolbenstange und den Kolben groß genug war, gibt das Druckstück 176-2 der Druckeinwirkung durch den Ventilkolben 174 nach, indem die Tellerfedern 176-5 ein Stück weit zusammengedrückt werden. Der Ventilkolben 174 verschiebt sich dann innerhalb seines Hubbereiches H bis maximal zu einem Ventilkolbenanschlagskörper 178, welcher fest mit dem Ventilgehäuse 172, oder wie in Figur 2 gezeigt, alternativ fest mit dem Druckrohr 120 verbunden ist. Vorzugsweise ist die Federcharakteristik der Druckfedereinrichtung 176-5 bezüglich ihres transienten Verhaltens so ausgebildet, dass sie bei Drücken oberhalb des Druckschwellenwertes ein schlagartiges Verschieben des Kolbens 174 und damit einhergehend ein schlagartiges Verschließen des Ventilkanals 160-163 ermöglicht. Alternativ dazu kann die Federcharakteristik jedoch auch ein beliebiges anderes transientes Verhalten des Ventilkolbens 174 beim Übergang von einer in Figur 2 gezeigten geöffneten Ventilkanalstellung hin zu einem geschlossenen Ventilkanal ermöglichen.

Eine Bewegung des Ventilkolbens 174 über seinen gesamten Hubbereich H, das heißt ein absolutes Verschließen des Ventilkanals 160-163, ist deshalb prinzipiell möglich, weil erste, in dem Druckrohr befindliche Kanäle 164 zum Verdrängen von Hydraulikflüssigkeit aus dem Druckraum 122 in den Speicherraum 150 vorgesehen sind. Falls derartige erste Kanäle fehlen würden und der Druckraum 122 bei Anschlag des Ventilkolbens 174 an den Ventilanschlagskörper 178 vollständig geschlossen wäre, hätte dies auf Grund der Inkompressibilität der Hydraulikflüssigkeit zur Folge, dass der Stoßdämpfer keine dämpfende Wirkung mehr entfalten würde und die Masse 200 abrupt abgebremst würde.

Typischerweise wird der Stoßdämpfer 100 mit der erfindungsgemäßen Ventileinrichtung 170 mit einer Mehrzahl derartiger erster Kanäle 164 ausgebildet; die erfindungsgemäße Ventileinrichtung dient dann zu einer schlagartigen Vergrößerung/Umschaltung der Dämpfungskonstante des Stoßdämpfers bei Auftreffen von Massen oberhalb eines Massenschwellenwertes. Durch das Vorhandensein der ersten Kanäle 164, die in dem Druckraum 122 vorzugsweise über dessen axiale Länge verteilt angeordnet sind, wird dann durch die frühzeitige Umschaltung der Dämpfungskonstante gewährleistet, dass auch diese großen Massen aufgrund der größeren Dämpfungskonstante über den vorhandenen Dämpfungsweg kontrolliert abgebremst werden können. Idealerweise ist der erfindungsgemäße Dämpfer so ausgelegt, dass leichte abzubremsende Massen ohne Umschaltung der Ventileinrichtung bei kleiner Dämpfungskonstante möglichst ebenso den Endanschlag erreichen (mit möglichst kleiner Endgeschwindigkeit), wie große Massen, bei denen eine Umschaltung stattfindet, so dass dann eine entsprechend größere Dämpfungskonstante vorliegt, weshalb der Dämpfungsweg konstant bleiben kann.

Sind derartige weitere Kanäle nicht vorhanden, so ist eine Kontrolle des Dämpfungsweges der Masse durch eine kontrollierte Veränderung des Querschnitts des Ventilkanals 160-163 durch geeignete Ausbildung der Federcharakteristik der Druckfedereinrichtung 176-5 denkbar; insbesondere sollte die Federcharakteristik dann so ausgebildet sein, dass sie nicht ein schlagartiges, sondern ein langsames kontrolliertes Schließen des Ventilkanals 160-163 ermöglicht. Auch sollte dann selbst bei höchsten Drücken noch ein Restdrosselquerschnitt vorhanden sein.

## Patentansprüche

1. Stoßdämpfer (100) zum Dämpfen der Bewegung einer Masse (200) mit:
- einem Gehäuse (110);
- einem in dem Gehäuse (110) gelagerten Druckrohr (120), welches einen Druckraum (122) ausbildet und mit einer Hydraulikflüssigkeit gefüllt ist;
- einem Kolben (130), welcher in dem Druckrohr (120) axial verschiebbar ist und den Druckraum einseitig begrenzt;
- einer Kolbenstange (140) zum Übertragen der Bewegung der Masse (200) auf den Kolben (130);
- einem Speicherraum (150) zum Speichern der Hydraulikflüssigkeit auch außerhalb des Druckraumes (122);
- mindestens einem ersten Kanal (164) zum Austauschen der Hydraulikflüssigkeit zwischen dem Druckraum (122) und dem Speicherraum (150)
- mindestens einem zweiten Kanal (160), der den Druckraum (122) und den Speicherraum (150) verbindet und
- einer Ventileinrichtung (170) mit einem Ventilgehäuse (172) und einem Ventilkolben (174), die in dem zweiten Kanal (160) eingebaut ist, wodurch dieser als Ventilkanal ausgebildet ist, wobei der Ventilkolben (174) nach Maßgabe des jeweils aktuellen Druckes in dem Druckraum (122) in dem Ventilgehäuse (172) verschiebbar gelagert ist,
**dadurch gekennzeichnet, dass** der Ventilkanal (160) so durch die Ventileinrichtung (170) geführt ist, dass der Drosselquerschnitt des Ventilkanals (160) zunehmend verringert wird, wenn sich der Ventilkolben (174) aufgrund von steigendem Druck in dem Druckraum (122) verschiebt und der mindestens eine erste Kanal (164) sich in einer Wandung des Druckrohres (120) befindet.

2. Stoßdämpfer nach Anspruch 1, **dadurch gekennzeichnet, dass** die Ventileinrichtung (170) neben dem Ventilkolben (174) eine Gegendruckfedereinrichtung (176) aufweist, und der Ventilkolben (174) so angeordnet ist, dass er mit einem ersten Teil weist, und der Ventilkolben (174) so angeordnet ist, dass er mit einem ersten Teil seiner Oberfläche (O1) dem jeweils aktuellen Druck in dem Druckraum ausgesetzt ist und mit einem zweiten, dem ersten Teil gegenüberliegenden Teil seiner Oberfläche (02) an der Gegendruckfedereinrichtung (176) anliegt.

3. Stoßdämpfer (100) nach Anspruch 2, **dadurch gekennzeichnet, dass** die Gegendruckfedereinrichtung (176) aufweist:
- eine Druckstückführung (176-1);
- ein Druckstück (176-2) in Form eines Anschlagkolbens, welcher mit seinem einen Ende in der Druckstückführung geführt ist und welcher an seinem anderen Ende, an welches die zweite Oberfläche (02) des Ventilkolbens (174) anschlägt, einen radial auslagernden Flansch (176-2) aufweist;
- einen Druckstückanschlagskörper (176-4) für den Flansch zum Begrenzen einer Bewegung des Druckstücks in Richtung Druckraum (122); und
- eine zwischen der Druckstückführung (176-1) und dem Flansch (176-3) angeordnete Druckfedereinrichtung (176-5) mit einer gewünschten Federcharakteristik zum Andrücken des Druckstücks (176-2) an den Druckstücksanschlagkörper (176-4) mit einem vorbestimmten Druckschwellenwert.

4. Stoßdämpfer (100) nach Anspruch 3, **dadurch gekennzeichnet, dass** die Druckfedereinrichtung (176-5) in Form eines Paketes von Tellerfedern ausgebildet ist und/oder der Druckstückanschlagskörper (176-4) fest an dem Ventilgehäuse (172) angebracht ist.

5. Stoßdämpfer (100) nach Anspruch 3 oder 4, **dadurch gekennzeichnet, dass** die Federcharakteristik der Druckfedereinrichtung (176-5) so ausgebildet ist, dass das Druckstück (176-2) erst bei einer Druckeinwirkung oberhalb des Druckschwellenwertes dem Ventilkolben (174) schlagartig nachgibt.

6. Stoßdämpfer (100) nach einem der Ansprüche 3 bis 5, **dadurch gekennzeichnet, dass** der Druckschwellenwert so groß gewählt ist, dass er nur dann von einem von dem Ventilkolben (174) auf das Druckstück (176-2) aufgebrachten Druck überschritten wird, wenn die in ihrer Bewegung zu dämpfende Masse (200) einen vorbestimmten Impulsschwellenwert überschreitet.

7. Stoßdämpfer (100) nach einem der Ansprüche 3 bis 6, **dadurch gekennzeichnet, dass** die Gegendruckfedereinrichtung (176) weiterhin einen Verschlussstopfen (176-6) aufweist, welcher vorzugsweise in ein Gewinde (177) einer Öffnung des Ventilgehäuses (172) einschraubbar ist; und
die Druckstückführung (176-2) mit dem Verschlussstopfen (176-6) verbunden ist, so dass die Position der Druckstückführung relativ zu dem ortfesten Druckstückanschlagskörper und damit der Druckschwellenwert durch Drehen des Verschlussstopfens (176-6) in dem Gewinde (177) variabel einstellbar ist.

8. Stoßdämpfer (100) nach einem der vorangegangenen Ansprüche, **dadurch gekennzeichnet, dass** ein Abschnitt (162) des Ventilkanals (160) durch den Ventilkolben(174) geführt ist und dass der Ventilkanal (160) so durch den Hubbereich (H) des Ventilkolbens (174) geführt ist, dass der Drosselquerschnitt des Ventilkanals durch den Ventilkolben nach Maßgabe von dessen Position in seinem Hubbereich (H) veränderbar ist.

9. Stoßdämpfer (100) nach einem der vorangegangenen Ansprüche, **dadurch gekennzeichnet, dass** die Ventileinrichtung (170) einen ortsfesten Ventilkolbenanschlagskörper (178) aufweist zum Begrenzen der Bewegung des Ventilkolbens (174) bei steigendem Druck in dem Druckraum (122) und dass das Ventilgehäuse (172) einstückig mit dem Gehäuse (110) des Stoßdämpfers ausgebildet ist.

10. Stoßdämpfer (100) nach einem der vorangegangenen Ansprüche, **dadurch gekennzeichnet, dass** die Ventileinrichtung (170) an einer dem Kolben (130) des Stoßdämpfers gegenüberliegenden Stirnseite des Gehäuses des Stoßdämpfers angeordnet ist, wobei dann insbesondere der Ventilkolben (174) den Druckraum (122) stückweise begrenzt.

11. Stoßdämpfer (100) nach Anspruch 10, **dadurch gekennzeichnet, dass** der Ventilkolben (174) koaxial zu dem Kolben (130) des Stoßdämpfers, vorzugsweise ebenfalls in dem Druckrohr (120), gelagert ist und dass zwischen dem Kolben (130) des Stoßdämpfers und dem Ventilkolben (174) eine weitere Druckfedereinrichtung (179) vorgesehen ist, deren Federkonstante wesentlich kleiner ist als die Federkonstante der Druckfedereinrichtung (176-5) der Gegendruckfedereinrichtung (176).

12. Stoßdämpfer (100) nach einem der Ansprüche 1 bis 11, **dadurch gekennzeichnet, dass** das Ventilgehäuse (172) als Stutzen in einem beliebigen Winkel α > 0 seitlich, vorzugsweise quer, zur axialen Richtung (R) des Stoßdämpfers an dessen Gehäuse (110) angebracht ist und der Ventilkolben (174) entsprechend dem beliebigen Winkel (α) relativ zu der axialen Richtung (R) des Stoßdämpfers verschiebbar in dem Ventilgehäuse (172) gelagert ist.

13. Stoßdämpfer (100) nach einem der vorangegangenen Ansprüche, **dadurch gekennzeichnet, dass** der mindestens eine erste Kanal (164) zum Austauschen von Hydraulikflüssigkeit zwischen dem Druckraum (122) und dem Speicherraum (150) im Übergang zum Druckraum (122) eine Drosselöffnung ausbildet, welche - je nach Position des Kolbens (130) des Stoßdämpfers in dem Druckraum - von dem Kolben (130) im Zuge von dessen Bewegung zumindest teilweise verschlossen wird.

## Claims

1. A shock absorber (100) for damping the movement of a mass (200) with:
- a housing (110);
- a pressure pipe (120) mounted in the housing (110), which forms a pressure chamber (122) and is filled with a hydraulic fluid;
- a piston (130), which is axially displaceable in the pressure pipe (120) and delimits the pressure chamber on one side;
- a piston rod (140) for transferring the movement of the mass (200) to the piston (130);
- a storage chamber (150) for storing the hydraulic fluid also outside the pressure chamber (122);
- at least a first duct (164) for exchanging the hydraulic fluid between the pressure chamber (122) and the storage chamber (150);
- at least a second duct (160), which connects the pressure chamber (122) and the storage chamber (150) and
- a valve arrangement (170) with a valve housing (172) and a valve piston (174), which is incorporated in the second duct (160), whereby the latter is constructed as a valve duct, wherein the valve piston (174) is mounted displaceably in the valve housing (172) according to the respectively prevailing pressure in the pressure chamber (122),
**characterized in that** the valve duct (160) is guided through the valve arrangement (170) so that the throttle cross-section of the valve duct (160) is reduced increasingly when the valve piston (174) moves owing to rising pressure in the pressure chamber (122) and the at least one first duct (164) is situated in a wall of the pressure pipe (120).

2. The shock absorber according to Claim 1, **characterized in that** the valve arrangement (170) in addition to the valve piston (174) has a counter pressure spring arrangement (176), and the valve piston (174) is arranged so that it is exposed with a first part of its surface (01) to the respectively prevailing pressure in the pressure chamber, and with a second part of its surface (02), lying opposite the first part, lies against the counter pressure spring arrangement (176).

3. The shock absorber (100) according to Claim 2, **characterized in that** the counter pressure spring arrangement (176) comprises:
- a pressure piece guide (176-1);
- a pressure piece (176-2) in the form of a stop piston, which is guided by its one end in the pressure piece guide and which at its other end, against which the second surface (02) of the valve piston (174) strikes, has a radially outward flange (176-2);
- a pressure piece stop body (176-4) for the flange for delimiting a movement of the pressure piece in the direction of the pressure chamber (122); and
- a pressure spring arrangement (176-5), arranged between the pressure piece guide (176-1) and the flange (176-3), with a desired spring characteristic for pressing the pressure piece (176-2) against the pressure piece stop body (176-4) with a predetermined pressure threshold value.

4. The shock absorber (100) according to Claim 3, **characterized in that** the pressure spring arrangement (176-5) is constructed in the form of a set of plate springs and/or the pressure piece stop body (176-4) is mounted securely on the valve housing (172).

5. The shock absorber (100) according to Claim 3 or 4, **characterized in that** the spring characteristic of the pressure spring arrangement (176-5) is constructed so that the pressure piece (176-2) yields abruptly to the valve piston (174) only in the case of an action of pressure above the pressure threshold value.

6. The shock absorber (100) according to one of Claims 3 to 5, **characterized in that** the pressure threshold value is selected to be so great that it is only exceeded by a pressure applied by the valve piston (174) onto the pressure piece (176-2) when the mass (200), which is to be damped in its movement, exceeds a predetermined impulse threshold value.

7. The shock absorber (100) according to one of Claims 3 to 6, **characterized in that** the counter pressure spring arrangement (176) has in addition a closing plug (176-6), which is preferably able to be screwed into a thread (177) of an opening of the valve housing (172); and the pressure piece guide (176-2) is connected with the closing plug (176-6) so that the position of the pressure piece guide relative to the fixed pressure piece stop body and hence the pressure threshold value is variably adjustable by turning the closing plug (176-6) in the thread (177).

8. The shock absorber (100) according to one of the preceding claims, **characterized in that** a section (162) of the valve duct (160) is guided through the valve piston (174) and that the valve duct (160) is guided through the stroke region (H) of the valve piston (174) so that the throttle cross-section of the valve duct is changeable by the valve piston according to its position in its stroke region (H).

9. The shock absorber (100) according to one of the preceding claims, **characterized in that** the valve arrangement (170) has a fixed valve piston stop body (178) for delimiting the movement of the valve piston (174) in the case of rising pressure in the pressure chamber (122), and that the valve housing (172) is constructed in one piece with the housing (110) of the shock absorber.

10. The shock absorber (100) according to one of the preceding claims, **characterized in that** the valve arrangement (170) is arranged on a front face of the housing of the shock absorber lying opposite the piston (130) of the shock absorber, wherein then in particular the valve piston (174) successively delimits the pressure chamber (122).

11. The shock absorber (100) according to Claim 10, **characterized in that** the valve piston (174) is mounted coaxially to the piston (130) of the shock absorber, preferably likewise in the pressure pipe (120), and that between the piston (130) of the shock absorber and the valve piston (174) a further pressure spring arrangement (179) is provided, the spring constant of which is substantially less than the spring constant of the pressure spring arrangement (176-5) of the counter pressure spring arrangement (176).

12. The shock absorber (100) according to one of Claims 1 to 11, **characterized in that** the valve housing (172) is arranged as a socket at an arbitrary angle α > 0 laterally, preferably transversely, to the axial direction (R) of the shock absorber on its housing (110), and the valve piston (174) is mounted in accordance with the arbitrary angle (α) relative to the axial direction (R) of the shock absorber displaceably in the valve housing (172).

13. The shock absorber (100) according to one of the preceding claims, **characterized in that** the at least one first duct (164) for the exchanging of hydraulic fluid between the pressure chamber (122) and the storage chamber (150) in the transition to the pressure chamber (122) forms a throttle opening, which - according to the position of the piston (130) of the shock absorber in the pressure chamber - is at least partially closed by the piston (130) in the course of its movement.

## Revendications

1. Amortisseur (100) pour l'amortissement du mouvement d'une masse (200) comprenant :
- un carter (110) ;
- un tuyau à pression (120) monté dans le carter (110), qui forme un espace de pression (122) et est rempli d'un liquide hydraulique ;
- un piston (130), qui peut coulisser axialement dans le tuyau à pression (120) et délimite l'espace de pression sur un côté ;
- une tige de piston (140) pour la transmission du mouvement de la masse (200) au piston (130) ;
- un espace accumulateur (150) pour le stockage du liquide hydraulique également en dehors de l'espace de pression (122) ;
- au moins un premier canal (164) pour l'échange du liquide hydraulique entre l'espace de pression (122) et l'espace accumulateur (150)
- au moins un second canal (160), qui relie à l'espace de pression (122) et l'espace accumulateur (150) et
- un dispositif de soupape (170) avec un carter de soupape (172) et un piston de soupape (174), qui est monté dans le second canal (160), celui-ci étant conçu comme canal de soupape, le piston de soupape (174) étant monté de façon coulissante dans le carter de soupape (172) en fonction de la pression actuelle dans l'espace de pression (122),
**caractérisé en ce que** le canal de soupape (160) est guidé par le dispositif de soupape (170), de telle sorte que la section d'étranglement du canal de soupape (160) est réduite de plus en plus, lorsque le piston de soupape (174) se déplace du fait de la pression croissante dans l'espace de pression (122) et le au moins un premier canal (164) se trouve dans une paroi du tuyau à pression (120).

2. Amortisseur selon la revendication 1, **caractérisé en ce que** le dispositif de soupape (170) présente en plus du piston de soupape (174) un dispositif de ressort de contre-pression (176), et le piston de soupape (174) est disposé de telle sorte qu'il est exposé avec une première partie de sa surface (O1) à la pression respectivement actuelle dans l'espace de pression et s'applique avec une seconde partie, opposée à la première partie, de sa surface (02) sur le dispositif de ressort de contre-pression (176).

3. Amortisseur (100) selon la revendication 2, **caractérisé en ce que** le dispositif de ressort de contre-pression (176) présente :
- un guide de pièce de pression (176-1) ;
- une pièce de pression (176-2) sous la forme d'un piston de butée, qui est guidé par l'une de ses extrémités dans le guide de pièce de pression et qui présente sur son autre extrémité, sur laquelle la seconde surface (02) du piston de soupape (174) bute, une bride (176-2) se déplaçant radialement ;
- un corps de butée de pièce de pression (176-4) pour la bride pour limiter un déplacement de la pièce de pression en direction de l'espace de pression (122) ; et
- un dispositif de ressort de pression (176-5) disposé entre le guide de pièce de pression (176-1) et la bride (176-3) avec une caractéristique élastique souhaitée pour appuyer la pièce de pression (176-2) sur le corps de butée de pièce de pression (176-4) avec une valeur seuil de pression prédéfinie.

4. Amortisseur (100) selon la revendication 3, **caractérisé en ce que** le dispositif de ressort de pression (176-5) est conçu sous forme d'un ensemble de ressorts Belleville et/ou le corps de butée de pièce de pression (176-4) est placé fixement sur le carter de soupape (172).

5. Amortisseur (100) selon la revendication 3 ou 4, **caractérisé en ce que** la caractéristique élastique du dispositif de ressort de pression (176-5) est conçue, de telle sorte que la pièce de pression (176-2) ne cède brusquement au piston de soupape (174) que lors d'un effet de pression au-dessus de la valeur seuil de pression.

6. Amortisseur (100) selon l'une des revendications 3 à 5, **caractérisé en ce que** la valeur seuil de pression est choisie suffisamment grande pour qu'elle ne soit dépassée par une pression appliquée par le piston de soupape (174) sur la pièce de pression (176-2) que dans le cas où la masse (200), à amortir dans son mouvement, dépasse une valeur seuil d'impulsion prédéfinie.

7. Amortisseur (100) selon l'une des revendications 3 à 6, **caractérisé en ce que** le dispositif de ressort de contre-pression (176) présente également un bouchon de fermeture (176-6), qui peut être vissé de préférence dans un filetage (177) d'une ouverture du carter de soupape (172) ; et
le guide de pièce de pression (176-2) est relié au bouchon de fermeture (176-6), de telle sorte que la position du guide de pièce de pression par rapport au corps de butée fixe de pièce de pression et donc la valeur seuil de pression peuvent être réglées de façon variable par rotation du bouchon de fermeture (176-6) dans le filetage (177).

8. Amortisseur (100) selon l'une des revendications précédentes, **caractérisé en ce qu'**une partie (162) du canal de soupape (160) est guidée par le piston de soupape (174) et **en ce que** le canal de soupape (160) est guidé par la zone de levage (H) du piston de soupape (174), de façon que la section d'étranglement du canal de soupape puisse être modifiée par le piston de soupape en fonction de sa position dans sa course de levage (H).

9. Amortisseur (100) selon l'une des revendications précédentes, **caractérisé en ce que** le dispositif de soupape (170) présente un corps de butée fixe de piston de soupape (178) pour limiter le mouvement du piston de soupape (174) dans le cas d'une pression croissante dans l'espace de pression (122) et **en ce que** le carter de soupape (172) est conçu d'une seule pièce avec le carter (110) de l'amortisseur.

10. Amortisseur (100) selon l'une des revendications précédentes, **caractérisé en ce que** le dispositif de soupape (170) est disposé sur un côté avant, opposé au piston (130) de l'amortisseur, du carter de l'amortisseur, en particulier le piston de soupape (174) délimitant alors par endroits l'espace de pression (122).

11. Amortisseur (100) selon la revendication 10, **caractérisé en ce que** le piston de soupape (174) est monté sur le même axe que le piston (130) de l'amortisseur, de préférence également dans le tuyau à pression (120), et **en ce qu'**un autre dispositif de ressort de pression (179), dont la constante de ressort est nettement inférieure à la constante de ressort du dispositif de ressort de pression (176-5) du dispositif de ressort de contre-pression (176), est prévu entre le piston (130) de l'amortisseur et le piston de soupape (174).

12. Amortisseur (100) selon l'une des revendications 1 à 11, **caractérisé en ce que** le carter de soupape (172) est placé comme tubulure dans un angle quelconque α > 0 sur le côté, de préférence transversalement, par rapport à la direction axiale (R) de l'amortisseur sur son carter (110) et le piston de soupape (174) est monté de façon coulissante dans le carter de soupape (172) en fonction de l'angle (α) quelconque par rapport à la direction axiale (R) de l'amortisseur.

13. Amortisseur (100) selon l'une des revendications précédentes, **caractérisé en ce que** le au moins un premier canal (164) forme pour le remplacement du liquide hydraulique entre l'espace de pression (122) et l'espace accumulateur (150) dans la transition avec l'espace de pression (122) une ouverture d'étranglement, qui - selon la position du piston (130) de l'amortisseur dans l'espace de pression - est fermée au moins partiellement par le piston (130) au cours de son déplacement.
